# FASCICULE DE BREVET EUROPEEN

(11) **EP 0 593 357 B1**
(45) Date de publication et mention de la délivrance du brevet: **14.01.1998**
(21) Numéro de dépôt: 93402517.2
(22) Date de dépôt: 13.10.1993
(51) Int. Cl.: G01N 27/90, G01D 11/30, G01N 29/22

(54) **Dispositif support d'une sonde de détection et de localisation de défauts éventuels à l'intérieur d'un alésage**
Aufhängungsvorrichtung einer Sonde zur Detektion und Lokalisation von eventuellen Fehlern im Inneren einer Bohrung
Supporting device of a probe for the detection and localization of possible defects inside a bore

(30) Priorité: 14.10.1992 FR 9212244
(43) Date de publication de la demande: 20.04.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Meiffren, Jean-Luc, F-91250 Saint Germain les Corbeil (FR); Robin, José Claude Jacques, F-78960 Voisins le Bretonneux (FR)
(74) Mandataire: Moinat, François

(56) Documents cités:
- EP-A- 0 461 763
- FR-A- 2 543 686
- US-A- 3 831 084

## Description

La présente invention concerne un dispositif support d'une sonde de détection et de localisation de défauts éventuels à l'intérieur d'un alésage.

Des incidents survenus en vol sur des avions ou des hélicoptères, ont révélé l'apparition de criques dans une zone particulièrement peu accessible de l'arbre porte-hélice, plus précisément à l'intersection de deux canaux de lubrification internes de faible diamètre. Ces criques, initiées lors du fonctionnement de l'avion peuvent entraîner la rupture de l'arbre, la perte du moteur et même l'écrasement de l'avion. Il est donc important lors des opérations de révision et de maintenance des appareils, de vérifier si de telles criques sont en cours de formation.

Plusieurs techniques de contrôle ont été envisagées, dont la magnétoscopie. Cette technique consiste à arroser la pièce à contrôler, d'un liquide contenant des particules métalliques et à soumettre l'ensemble à un champ magnétique. Si une crique existe dans la pièce, il apparaîtra alors un champ de fuite aisément mesurable. Toutefois, cette technique ne permet de détecter les défauts que lorsque ceux-ci ont pris des dimensions importantes, c'est-à-dire beaucoup trop tardivement pour répondre à des impératifs de sécurité.

On a donc cherché à mettre au point un dispositif de contrôle de pièces, permettant une détection extrêmement précoce et fiable des défauts éventuels.

Ce dispositif s'applique d'une façon générale à la détection précoce de criques apparaissant à l'intérieur d'un alésage de faible dimension et donc difficile d'accès, que cet alésage soit prévu sur un arbre porte-hélice ou n'importe quelle autre pièce mécanique.

La solution proposée utilise une sonde, notamment une sonde de contrôle par courants de Foucault. Cette sonde constitue un équipement portable et donc pratique puisqu'il peut être utilisé directement sur le site de contrôle des pièces. De surcroît, cette technique de contrôle est fiable. Toutefois, il serait souhaitable de pouvoir effectuer des contrôles reproductibles sur la même pièce et sur toutes les pièces d'une même série. A cet effet, il serait souhaitable d'avoir un dispositif support de ladite sonde permettant de déplacer celle-ci par rapport à la pièce à contrôler selon des positions précises, prédéterminées.

On connaît déjà d'après l'art antérieur plusieurs dispositifs utilisant une sonde à courants de Foucault pour contrôler un certain nombre de pièces mécaniques.

Ainsi, le document FR-A-2 543 686 décrit un dispositif de support pour une sonde à courants de Foucault permettant de placer cette sonde dans plusieurs positions prédéterminées par rapport à une surface à analyser. Ce dispositif de support est spécifiquement conçu pour l'analyse de la surface extérieure d'une pièce et notamment d'une partie d'un rotor, mais n'est en aucun cas utilisable pour positionner une sonde à courants de Foucault à l'intérieur d'un alésage.

Le document FR-A-2 492 527 décrit un bloc de positionnement d'une sonde de contrôle par courants de Foucault, ce bloc étant destiné à être positionné sur l'aube d'une turbomachine. Pour les mêmes raisons que celles précédemment évoquées, il ne s'applique pas au contrôle d'alésages de faible diamètre.

On connaît également d'après le brevet US-A-4 142 154, un support pour une sonde de contrôle par courants de Foucault permettant de faire des mesures à l'intérieur d'un alésage. La sonde utilisée est recouverte d'un manchon de protection. Le support est muni d'un pas de vis, actionné par un moteur, permettant de déplacer ladite sonde en translation à l'intérieur de l'alésage à contrôler. Ce support comprend également un engrenage et un moteur permettant de faire tourner la sonde sur elle-même à l'intérieur de l'alésage.

Toutefois, la structure de ce dispositif est complexe et nécessite l'emploi de deux moteurs. En conséquence, ce dispositif est compliqué à réaliser.

On connaît enfin d'après le document EP-0 095 845, un appareil de contrôle utilisant une sonde à courants de Foucault pour effectuer des mesures à l'intérieur d'un alésage. Ce dispositif comprend un manchon à diamètre variable, à l'intérieur duquel la sonde est installée. Le dispositif peut être descendu manuellement à l'intérieur de l'alésage à contrôler et un moteur entraîne la rotation sur elle-même de la sonde.

On notera que la plupart des dispositifs porte-sonde existant, utilisent un moteur pour assurer les déplacements de la sonde et présentent, de ce fait, une structure complexe.

EP-A-461 763 décrit également un dispositif porte-sonde.

L'invention a justement pour but de réaliser un dispositif support de sonde, d'une structure et d'un emploi extrêmement simple, et qui permette de réaliser un balayage longitudinal de la paroi de l'alésage à contrôler, avec une incrémentation angulaire de la sonde.

L'invention a également pour but de réaliser un dispositif support de sonde permettant d'effectuer rapidement des mesures reproductibles, sur une série de pièces identiques, et ce, même par un opérateur non spécialiste de la technique.

L'invention a aussi pour but de réaliser un dispositif support de sonde particulièrement conçu pour déplacer une sonde à l'intérieur d'un alésage dont l'axe est oblique par rapport à la façe ou à l'axe principal de la pièce dans lequel il est prévu.

A cet effet, l'invention concerne un dispositif support d'une sonde de détection et de localisation de défauts éventuels à l'intérieur d'un alésage, comprenant une broche porte-sonde munie à l'une de ses extrémités de moyens de fixation de ladite sonde et un support de broche comprenant des moyens de guidage longitudinal de ladite broche et des moyens de positionnement angulaire de celle-ci.

Selon les caractéristiques de l'invention, le support de broche comprend au moins une embase de positionnement sur laquelle est fixée une plaque percée d'un orifice de guidage au travers duquel ladite broche peut coulisser. En outre, la broche porte-sonde comprend au moins un pion s'étendant radialement depuis sa surface extérieure et ladite plaque est munie d'au moins deux tiges de guidage disposées autour de l'orifice de guidage et s'entendant parallèlement à l'axe de cet orifice, ces tiges étant espacées l'une de l'autre d'une distance correspondant sensiblement à la largeur du pion, de façon que celui-ci puisse coulisser entre elles, ce pion et ces tiges coopérant de façon à former les moyens de guidage longitudinal.

De façon avantageuse, ce dispositif comprend au moins trois tiges de guidage et le pion et lesdites tiges coopèrent pour former les moyens de positionnement angulaire de ladite broche.

Ce dispositif support de sonde assure le positionnement rigoureux de la sonde, c'est-à-dire son centrage et son indexage angulaire. Il permet en outre le balayage de la zone de l'alésage à contrôler dans de bonnes conditions de reproductibilité et de fiabilité. Ce dispositif associé à une sonde sensible permet de détecter des criques de dimensions aussi faibles que 1,5 mm de long et 0,8 mm de profondeur, c'est-à-dire pratiquement dès leur apparition.

La présente invention sera mieux comprise à la lecture de la description suivante d'un mode de réalisation préférentiel de l'invention donné à titre d'exemple illustratif et non limitatif, cette description étant faite en faisant référence aux dessins joints, dans lesquels :
- la figure 1 est une vue schématique du dispositif support de sonde selon l'invention, lors du fonctionnement,
- la figure 2 est une vue en coupe partielle d'une partie du dispositif selon l'invention, et
- la figure 3 est une vue en coupe selon la ligne III-III de la figure 2.

Comme cela a déjà été décrit précédemment, ce dispositif support ainsi que la sonde sont utilisés en maintenance, afin notamment de détecter des criques sur une pièce du type arbre moteur, dans des zones d'accès difficile telles que l'intersection d'un alésage et d'un trou d'un diamètre assez faible.

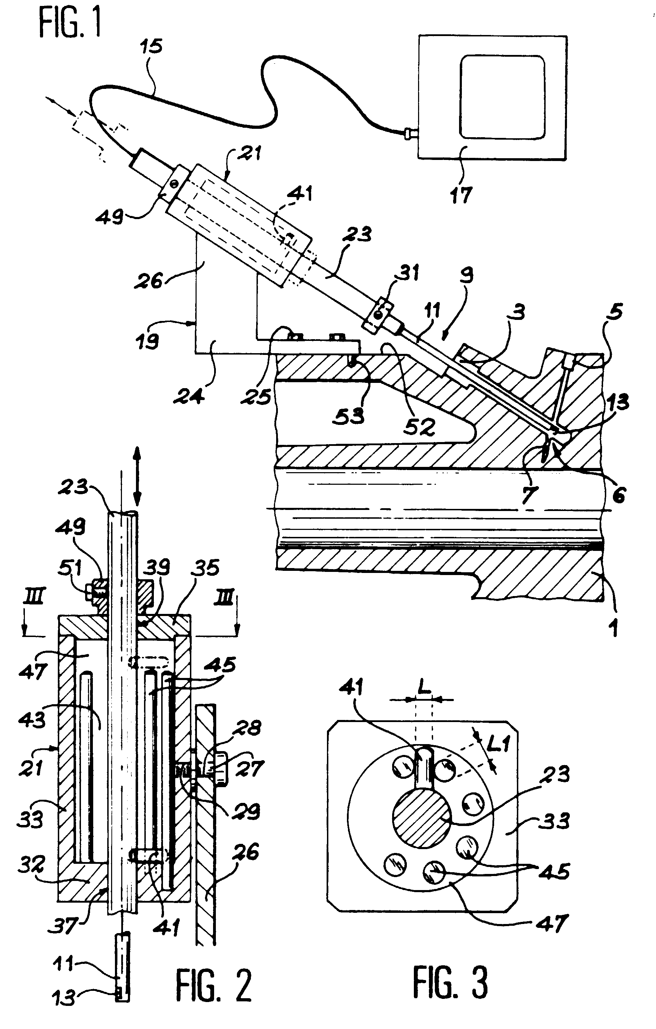

Dans le cas particulier illustré à la figure 1, la pièce à contrôler 1 est un arbre porte-hélice comprenant deux alésages de lubrification 3 et 5, respectivement d'un diamètre de 4,3 mm et 1,9 mm. On comprend donc aisément que ces alésages de part leurs faibles dimensions sont difficiles à contrôler même par des techniques d'endoscopie. Lorsque des criques s'initient, elles se créent généralement sur la partie 6 de la paroi interne de l'alésage 3 située en regard de l'alésage 5. Bien évidemment, on comprendra que ce dispositif peut être utilisé pour contrôler n'importe quelle pièce mécanique comprenant au moins un alésage à l'intérieur duquel une crique est susceptible de se former. La crique porte la référence 7.

La sonde 9 utilisée dans le mode de réalisation de l'invention est avantageusement une sonde de contrôle par courants de Foucault, mais il pourrait également s'agir d'un tout autre type de sonde. Cette sonde 9 comprend une tige 11 à l'extrémité de laquelle est prévu le capteur 13 proprement dit. Celui-ci est placé sur la paroi latérale de la tige 11, comme cela apparaît mieux en figure 2. Cette tige 11 se prolonge à son autre extrémité par un câble 15 relié à un oscilloscope 17 permettant d'effectuer les mesures. Le fonctionnement et la structure de cette sonde de contrôle par courant de Foucault sont classiques pour l'homme du métier, ils ne seront pas décrits davantage.

Le dispositif support de sonde selon l'invention comprend principalement une embase de positionnement 19, un carter 21 et une broche porte-sonde 23.

De façon avantageuse, l'embase de positionnement 19 a une forme en L. Elle est constituée d'un support plan 24 et d'un flasque 26 perpendiculaire au support plan 24 et sur lequel le carter 21 est fixé. Le support plan 24 peut avantageusement être fixé sur la pièce 1 à contrôler par l'intermédiaire de boulons 25.

De préférence et comme illustré en figure 2, ce carter 21 est fixé sur le flasque 26 par des moyens 27 autorisant un déplacement angulaire dudit carter 21 par rapport au flasque 26. Selon un mode réalisation de l'invention, ces moyens 27 sont constitués par une vis. Dans ce cas, un alésage 28 et un alésage taraudé 29 sont prévus respectivement sur le flasque 26 et sur l'une des parois du carter 21.

Comme illustré en figure 1, la broche porte-sonde 23 est munie à l'une de ses extrémités d'un mandrin 31 permettant d'assurer la fixation de la sonde 9 et plus particulièrement de la tige 11. Ce mandrin 31 comprend, de façon classique, une bague de serrage. La broche porte-sonde 23 est creuse, de façon à permettre le passage du câble 15.

Comme illustré en figure 2, le carter 21 comprend une plaque 32 formant fond, des parois latérales 33 et une plaque 35 formant couvercle. Selon un mode de réalisation préféré de l'invention, et comme cela est illustré aux figures 2 et 3, ce carter a une forme générale de parallélépipède rectangle. La plaque formant fond 32 et la plaque formant couvercle 35 sont percées respectivement chacune d'un orifice de guidage 37 et 39 permettant le passage de la broche porte-sonde 23, qui peut ainsi coulisser à l'intérieur du carter 21.

La broche porte-sonde 23 est munie sur sa surface extérieure d'au moins un ergot ou pion 41 s'étendant radialement par rapport à l'axe longitudinal de ladite broche. Ce pion 41 est prévu sur la partie de broche se trouvant à l'intérieur de l'enceinte 43 définie par le carter 21. De préférence, cette enceinte 43 est cylindrique. En outre, le carter 21 est muni d'au moins deux tiges de guidage 45 s'étendant depuis la plaque formant fond 32, parallèlement à l'axe longitudinal de l'orifice de guidage 37. Ces tiges de guidage 45 sont disposées autour de l'orifice 37 et sont espacées l'une de l'autre d'une distance correspondant sensiblement à la largeur L du pion 41, de façon que celui-ci puisse coulisser entre elles sans frotter mais tout en étant maintenu ( voir figure 3). Ce pion 41 et ces tiges de guidage 45 coopèrent de façon à former des moyens de guidage longitudinal de la broche porte-sonde 23. En outre, les tiges de guidage 45 empêchent la broche 23 de tourner sur elle-même, puisque la rotation de celle-ci est limitée par le pion 41.

De préférence, toutefois, le carter 21 comprend au moins trois tiges de guidage 45 et de façon avantageuse, et comme illustré en figure 3, il en comprend six. Les tiges de guidage 45 ne s'étendent pas sur la totalité de la hauteur de l'enceinte 43 de façon à définir un espace de débattement 47 dont le rôle sera expliqué ultérieurement.

En outre, la broche porte-sonde 23 est munie d'une butée de fin de course 49 placée sur la partie de la broche se trouvant à l'extérieur du carter 21. De préférence, cette butée 49 a une forme annulaire. Elle entoure la broche porte-sonde 23. Elle est fixée sur celle-ci au moyen d'une vis 51 qui constitue ainsi un moyen de positionnement longitudinal de ladite butée le long de la broche 23. On peut ainsi ajuster la course de la broche porte-sonde 23 à l'intérieur du carter 21.

On notera que dans une forme simplifiée de réalisation de l'invention, les parois latérales 33 et la plaque 35 formant couvercle du carter 21 peuvent être supprimées. La broche porte-sonde 23 n'est alors plus maintenue et guidée que par les tiges 45 et par l'orifice de guidage 37. La plaque 32 est alors fixée directement sur le flasque 26 de l'embase 19.

Dans un troisième mode de réalisation de l'invention, on peut ne conserver que la plaque formant couvercle 35 et supprimer les parois 33 et la plaque 32. Dans ce cas, la plaque formant couvercle 35 est fixée sur l'embase de positionnement 19 et supporte les tiges de guidage 45.

Le fonctionnement du dispositif support de sonde va maintenant être expliqué plus en détail en faisant référence aux trois figures. L'utilisateur introduit la sonde 9 à l'intérieur de la broche porte-sonde 23, de façon que la tige 11 fasse saillie de ladite broche et que le câble 15 sorte à l'extrémité de cette dernière. Il serre ensuite le mandrin 31 de façon à bloquer la tige 11.

Par ailleurs, il fixe l'embase de positionnement 19 au moyen des vis 25 sur une pièce à contrôler témoin. Cette pièce témoin n'est pas représentée en figure 1, mais elle est en tous points, identique à la pièce 1. Elle comprend en outre une crique témoin constituée par électro-érosion et simulant la crique réelle. Cette crique témoin fait 1,5 mm de profondeur et 0,8 mm de largeur environ, ce qui correspond sensiblement aux plus petites criques détectables par la sonde 9. Cette pièce témoin sert à étalonner l'oscilloscope 17 et à régler le débattement de la sonde 9 et de la broche porte-sonde 23.

L'utilisateur peut ensuite procéder au réglage de l'oscilloscope 17, de façon à pouvoir effectuer les mesures avec la sonde 9. Il peut alors faire coulisser manuellement la broche porte-sonde 23 vers l'intérieur de l'alésage 3 de la pièce témoin, de façon que le capteur 13 parcourt toute la longueur d'une des génératrices de cet alésage 3. Lorsque la sonde atteint sensiblement le fond de l'alésage, l'utilisateur règle la position de la butée de fin de course 49 au moyen de la vis 51. Ainsi, dans les mesures ultérieures, il pourra sans risque manipuler plus rapidement la broche porte-sonde 23, sans que la sonde 9 ne touche le fond de l'alésage 3. En outre, il visse également la vis 27 de façon à adapter l'angle entre le carter 21 et le support plan 24 à l'angle formé par l'alésage 3 avec le plan 52 de la pièce 1 sur lequel l'embase de positionnement 19 est fixée.

Ensuite, l'utilisateur adapte le dispositif support de sonde sur la pièce à contrôler 1. Afin de faciliter cette manipulation, on peut prévoir sur l'embase 19 et notamment sur le support plan 24, un organe de détrompage 53, conçu pour coopérer avec un orifice prévu sur la pièce 1. Il effectue alors une première mesure en faisant coulisser la broche porte-sonde 23 jusqu'à ce que la tige 11 arrive sensiblement au fond de l'alésage 3 à contrôler. Au cours de cette opération, le pion 41 coopérant avec les tiges de guidage 45 permet de guider la broche 23 en translation. Lorsque l'utilisateur souhaite effectuer une deuxième mesure, il relève la broche 23 de façon à ramener le capteur 13 de la sonde 9 à l'entrée de l'orifice 3 à contrôler. En même temps, il ramène le pion 41 dans l'espace de débattement 47 du carter 21 et peut alors faire pivoter la broche porte-sonde 23 puisque le mouvement de rotation du pion 41 n'est plus limité par les tiges 45, (position représentée en traits mixtes en figure 2). Il engage ensuite le pion 41 entre deux tiges de guidage 45 contigües et descend de nouveau complétement la broche 23 à l'intérieur du carter 21.

De façon avantageuse, on dispose la sonde 9 à l'intérieur du dispositif support de sonde, de façon que le capteur 13 balaie toute la partie 6 de la paroi interne de l'alésage 3 située en regard de l'alésage 5. En d'autres termes, on place la tige 11 dans la broche porte-sonde 23, de façon que les cinq positions angulaires autorisées par les six tiges de guidage 45 permettent d'effectuer le contrôle de la zone précitée.

On comprendra aisément que le nombre de tiges de guidage 45 est fonction de la surface angulaire que l'on souhaite balayer avec la sonde. Ce nombre est d'au moins trois si l'on veut avoir une possibilité de choix entre deux positions angulaires définies. En outre, la largeur L du pion 41 et la largeur L₁ des tiges 45 pourront être adaptées en fonction de la valeur de l'écart angulaire souhaité entre deux mesures consécutives.

Grâce à ce dispositif support de sonde, un technicien, même peu expérimenté, pourra aisément effectuer des mesures en déplaçant manuellement la sonde selon un certain nombre de positions prédéterminées.

## Revendications

1. Dispositif support d'une sonde (9) de détection et de localisation de défauts éventuels à l'intérieur d'un alésage (3), comprenant une broche porte-sonde (23) munie à l'une de ses extrémités de moyens de fixation (31) de ladite sonde (9) et un support de broche (19, 21) comprenant des moyens de guidage longitudinal de ladite broche et des moyens de positionnement angulaire de celle-ci, caractérisé en ce que le support de broche comprend au moins une embase de positionnement (19) sur laquelle est fixée une plaque (32, 35) percée d'un orifice de guidage (37, 39) au travers duquel ladite broche (23) peut coulisser, en ce que la broche porte-sonde (23) comprend au moins un pion (41) s'étendant radialement depuis sa surface extérieure et en ce que ladite plaque (32, 35) est munie d'au moins deux tiges de guidage (45) disposées autour de l'orifice de guidage (37, 39) et s'étendant parallèlement à l'axe longitudinal de cet orifice, ces deux tiges (45) étant espacées l'une de l'autre d'une distance correspondant sensiblement à la largeur (L) du pion (41), de façon que celui-ci puisse coulisser entre elles, ce pion (41) et ces tiges (45) coopérant de façon à former les moyens de guidage longitudinal.

2. Dispositif support de sonde selon la revendication 1, caractérisé en ce qu'il comprend au moins trois tiges de guidage (45) et en ce que le pion (41) et lesdites tiges (45) coopèrent pour former les moyens de positionnement angulaire de ladite broche porte-sonde (23).

3. Dispositif support de sonde selon la revendication 1 ou 2, caractérisé en ce que la plaque (32, 35) percée d'un orifice de guidage (37, 39) est remplacée par un carter (21) muni de parois latérales (33), d'une plaque (32) formant fond et d'une plaque (35) formant couvercle, les tiges de guidage (45) s'étendant à l'intérieur de l'enceinte (43) définie par le carter (21).

4. Dispositif support de sonde selon la revendication 3, caractérisé en ce que les tiges de guidage (45) s'étendent sur une partie seulement de la longueur du carter (21), de façon à définir un espace de débattement (47) à l'intérieur duquel le pion (41) peut pivoter angulairement.

5. Dispositif support de sonde selon la revendication 1, caractérisé en ce que les moyens de fixation (31) de la sonde (9) sur la broche (23) comprennent un mandrin.

6. Dispositif support de sonde selon l'une des revendications 3 à 5, caractérisé en ce que la broche porte-sonde (23) est munie d'une butée de fin de course (49) placée sur sa paroi latérale et à l'extérieur de l'enceinte (43) définie par le carter (21).

7. Dispositif support de sonde selon la revendication 6, caractérisé en ce que la butée de fin de course (49) est munie de moyens de positionnement longitudinal (51) permettant de la déplacer le long de ladite broche porte-sonde (23).

8. Dispositif support de sonde selon la revendication 1 ou 3, caractérisé en ce que la plaque (32, 35) ou le carter (21) est fixé sur l'embase de positionnement (19) par des moyens (27) autorisant le déplacement angulaire de ladite plaque ou dudit carter par rapport à l'embase (19).

9. Dispositif support de sonde selon la revendication 1 ou 8, caractérisé en ce que l'embase de positionnement (19) comprend au moins un organe de détrompage (53) permettant de l'adapter à une pièce 1 munie de l'alésage (3) à contrôler.

10. Dispositif support de sonde selon l'une quelconque des revendications précédentes, caractérisé en ce que la sonde (9) est une sonde de contrôle par courants de Foucault.

## Patentansprüche

1. Haltevorrichtung für eine Sonde (9) zur Detektion und Lokalisation eventuell vorhandener Fehler im Inneren einer Bohrung (3), die eine Sondenträgerspindel (23), die an einem ihrer Enden mit Befestigungsmitteln (31) für die Sonde (9) versehen ist, sowie einen Spindelhalter (19, 21), der Mittel zur Führung der Spindel in Längsrichtung und Mittel zu deren Winkelpositionierung umfaßt, aufweist,
**dadurch gekennzeichnet,**
daß der Spindelhalter mindestens eine Positionier-Sockelplatte (19) aufweist, an der eine Platte (32, 35) mit einer durchgehenden Führungsöffnung (37, 39) befestigt ist, durch die sich die genannte Spindel (23) verschieben kann, daß die Sondenträgerspindel (23) mindestens einen Zapfen (41) aufweist, der sich von ihrer Außenseite aus in radialer Richtung erstreckt, und daß die genannte Platte (32, 35) mit mindestens zwei Führungsstiften (45) versehen ist, die um die Führungsöffnung (37, 39) herum angeordnet sind und sich parallel zur Achse dieser Öffnung erstrecken, wobei diese beiden Stifte (45) sich in einem Abstand voneinander befinden, der im wesentlichen der Dicke (L) des Zapfens (41) entspricht, so daß dieser sich zwischen ihnen verschieben kann, wobei dieser Zapfen (41) und diese Stifte (45) dergestalt zusammenwirken, daß sie die Mittel zur Führung in Längsrichtung bilden.

2. Haltevorrichtung für eine Sonde nach Anspruch 1,
**dadurch gekennzeichnet,**
daß sie mindestens drei Führungsstifte (45) aufweist und daß der Zapfen (41) mit den genannten Stiften (45) zusammenwirkt, um die Winkelpositioniermittel der genannten Sondenträgerspindel (23) zu bilden.

3. Haltevorrichtung für eine Sonde nach Anspruch 1 oder 2,
**dadurch gekennzeichnet,**
daß die Platte (32, 35) mit der durchgehenden Führungsöffnung (37, 39) durch ein Gehäuse (21) ersetzt ist, das mit Seitenwänden (33), einer den Boden bildenden Platte (32) und einer den Deckel bildenden Platte (35) versehen ist, wobei sich die Führungsstifte (45) ins Innere des von dem Gehäuse (21) begrenzten Raums (43) erstrecken.

4. Haltevorrichtung für eine Sonde nach Anspruch 3,
**dadurch gekennzeichnet,**
daß sich die Führungsstifte (45) nur über einen Teil der Länge des Gehäuses (21) erstrecken, so daß sie einen Bewegungsraum (47) abgrenzen, innerhalb dessen der Zapfen (41) sich in einer Winkelbewegung drehen kann.

5. Haltevorrichtung für eine Sonde nach Anspruch 1,
**dadurch gekennzeichnet,**
daß die Befestigungsmittel (31) der Sonde (9) an der Spindel (23) aus einem Spannfutter bestehen.

6. Haltevorrichtung für eine Sonde nach einem der Ansprüche 3 bis 5,
**dadurch gekennzeichnet,**
daß die Sondenträgerspindel (23) mit einem Hubendeanschlag (49) versehen ist, der sich an ihrer Seitenwand und außerhalb des von dem Gehäuse (21) gebildeten Raums (43) befindet.

7. Haltevorrichtung für eine Sonde nach Anspruch 6,
**dadurch gekennzeichnet,**
daß der Anschlag (49) mit Mitteln zum Positionieren in Längsrichtung (51) versehen ist, durch die er entlang der genannten Sondenträgerspindel (23) verschoben werden kann.

8. Haltevorrichtung für eine Sonde nach Anspruch 1 oder 3,
**dadurch gekennzeichnet,**
daß die Platte (32, 35) oder das Gehäuse (21) an der Positionier-Sockelplatte (19) durch Mittel (27) befestigt ist, die die Winkelverschiebung der genannten Platte oder des genannten Gehäuses gegenüber der Sockelplatte (19) zulassen.

9. Haltevorrichtung für eine Sonde nach Anspruch 1 oder 8,
**dadurch gekennzeichnet,**
daß die Positionier-Sockelplatte (19) mindestens ein Unverwechselbarkeitsorgan (53) aufweist, durch das sie an ein Teil (1) mit der zu überprüfenden Bohrung (3) angepaßt werden kann.

10. Haltevorrichtung für eine Sonde nach einem der vorherigen Ansprüche,
**dadurch gekennzeichnet,**
daß die Sonde (9) eine Prüfsonde ist, die mit Foucaultschen Strömen arbeitet.

## Claims

1. Device for supporting a probe (9) for the detection and location of possible defects inside a bore (3), comprising a probe-holder spindle (23) equipped at one of its ends with means (31) for attaching the said probe (9) and a spindle support (19, 21) comprising means for longitudinally guiding the said spindle and means for the angular positioning thereof, characterized in that the spindle support comprises at least a positioning base (19) to which there is attached a plate (32, 35) pierced with a guide hole (37, 39) through which the said spindle (23) can slide, in that the probe-holder spindle (23) comprises at least a pin (41) extending radially from its outer surface and in that the said plate (32, 35) is equipped with at least two guide rods (45) arranged around the guide hole (37, 39) and extending parallel to the longitudinal axis of this hole, these two rods (45) being spaced apart by a distance that more or less corresponds to the width (L) of the pin (41), so that this pin can slide between them, this pin (41) and these rods (45) cooperating in such a way as to form the means for longitudinal guidance.

2. Probe-support device according to Claim 1, characterized in that it comprises at least three guide rods (45) and in that the pin (41) and the said rods (45) cooperate to form the means for angularly positioning the said probe-holder spindle (23).

3. Probe-support device according to Claim 1 or 2, characterized in that the plate (32, 35) pierced with a guide hole (37, 39) is replaced by a casing (21) which has side walls (33), a plate (32) forming the bottom and a plate (35) forming a lid, the guide rods (45) extending inside the chamber (43) defined by the casing (21).

4. Probe-support device according to Claim 3, characterized in that the guide rods (45) extend over just part of the length of the casing (21) in such a way as to define an excursion space (47) inside which the pin (41) can pivot angularly.

5. Probe-support device according to Claim 1, characterized in that the means (31) of attaching the probe (9) to the spindle (23) comprise a chuck.

6. Probe-support device according to one of Claims 3 to 5, characterized in that the probe-holder spindle (23) has an end-of-travel stop (49) placed on its side wall and on the outside of the chamber (43) defined by the casing (21).

7. Probe-support device according to Claim 6, characterized in that the end-of-travel stop (49) has means (51) for its longitudinal positioning, allowing it to be moved along the said probe-holder spindle (23).

8. Probe-support device according to Claim 1 or 3, characterized in that the plate (32, 35) or the casing (21) is attached to the positioning base (19) by means (27) that allow angular movement of the said plate or of the said casing with respect to the base (19).

9. Probe-support device according to Claim 1 or 8, characterized in that the positioning base (19) comprises at least one foolproofing member (53) allowing it to be fitted to a component 1 that has a bore (3) to be inspected.

10. Probe-support device according to any one of the preceding claims, characterized in that the probe (9) is an eddy-current inspection probe.
